# EUROPÄISCHE PATENTSCHRIFT

(11) **EP 3 227 570 B1**
(45) Veröffentlichungstag und Bekanntmachung des Hinweises auf die Patenterteilung: **21.07.2021**
(21) Anmeldenummer: 15781942.6
(22) Anmeldetag: 20.10.2015
(51) Int. Cl.: F16B 21/09, B60R 13/02, F16B 5/06

(54) **CLIPWAVE SYSTEM**
CLIPWAVE SYSTEM
SYSTÈME DE CLIPSAGE

(30) Priorität: 04.12.2014 DE 102014224929
(43) Veröffentlichungstag der Anmeldung: 11.10.2017
(73) Patentinhaber: Bayerische Motoren Werke Aktiengesellschaft, 80809 München (DE)
(72) Erfinder: KRIPPL, Hermann, 94522 Wallersdorf (DE); BASKAYA, Tuba, 84130 Dingolfing (DE)
(86) Internationale Anmeldenummer: PCT/EP2015/074244
(87) Internationale Veröffentlichungsnummer: WO 2016/087112

(56) Entgegenhaltungen:
- EP-A2- 0 190 029
- EP-A2- 1 092 811
- US-A1- 2004 184 896
- US-A1- 2008 181 745

## Beschreibung

Die Erfindung betrifft eine Anordnung zum Befestigen eines aus Kunststoff bestehenden Halteelements an einer Metallfläche, mit einer Halteeinrichtung, die mit einem T-Bolzen, Stufen-Bolzen oder dergleichen zusammenwirkt, wobei der T-Bolzen einen Bolzen-Schaft und einen Bolzen-Kopf mit einem Unterkopf mit einer Auflagefläche zur Auflage auf mindestens einer an der Halteeinrichtung ausgeformten Gegenfläche aufweist und der Bolzen-Schaft an eine Metallfläche anschweißbar ist, und wobei die mindestens eine Gegenfläche der Halteeinrichtung an mindestens einer den Bolzen-Schaft zumindest zum Teil umschließenden Auflageschulter für den Unterkopf des Bolzen-Kopfs ausgebildet ist.

Halteelemente sind beispielsweise aus den Dokumenten EP 0 190 029 A2, US 2004/184896 A1 und EP 1 092 811 A2 bekannt.

Im Kraftfahrzeugbau, aber auch im Metallbau allgemein, ist es oft notwendig, an Werkstücken, z.B. Karosserieflächen, Bolzen anzuschweißen, an denen anschließend Halteelemente befestigt werden, die dann der Festlegung anderer Bauelemente dienen. Beim Anschweißen solcher Bolzen wird oft das Hubzündungsschweißverfahren verwendet, bei dem zu Beginn des Schweißvorgangs der Bolzen zunächst an der Schweißstelle aufgesetzt und anschließend mittels eines Hubmechanismus angehoben wird, wobei zunächst ein Hilfslichtbogen geringer Stromstärke und anschließend ein Hauptlichtbogen zwischen dem Bolzen und dem Werkstück zündet. Der Hauptlichtbogen erzeugt die Materialschmelze auf dem Karosserieblech und dem Bolzen-Fuß, anschließend wird der Bolzen zum Werkstück hinbewegt und angedrückt. Die beiden Schmelzzonen, nämlich diejenige im Basismaterial und die weitere am Bolzen vereinigen sich und es erfolgt nach dem Abschalten des Stroms die Erstarrung der Schmelzzone. Bei diesem Verbindungsvorgang kommt es zu einem Verspritzen von flüssiger Schmelze, so dass sich Schweiß- oder Schmelzpartikel unter dem Bolzen im Bereich des Bolzen-Unterkopfs festsetzen können. Da an dem Halteelement eine Halteeinrichtung mit einer Auflageschulter angeordnet ist, auf der der Unterkopf des T-Bolzens zur Auflage kommt, ist es bei einer derartigen Verschmutzung oft der Fall, dass nicht der Unterkopf, sondern Schmelz- oder Schweißpartikel zwischen dem Unterkopf und der Auflageschulter geraten. Hierdurch wird die Befestigungsqualität reduziert, weil das Halteelement nicht in der ordnungsgemäßen Position befestigt wird.

Es ist daher Aufgabe der Erfindung, eine Anordnung zur Befestigung eines Halteelements vorzuschlagen, bei der das Befestigen des Halteelements an dem Bolzen ordnungsgemäß erfolgen und ein Nacharbeiten der Auflagefläche des Unterkopfs entfallen kann.

Die Aufgabe der Erfindung wird dadurch gelöst, dass in der Auflageschulter Ausnehmungen ausgebildet sind, die die Gegenfläche unterbrechen.

Durch diese Maßnahme ist es den Schweißperlen ermöglicht, in die Ausnehmungen in der Auflageschulter einzutreten, so dass die Auflagefläche des Unterkopfs zur Auflage auf der Gegenfläche kommen kann. Die Ausnehmungen können bei alternativen Ausführungsformen hinreichend tief ausgebildet sein, so dass bei einem Zusammentreffen von Schweißperlen und der Zwischenwand zwischen den Ausnehmungen die Zwischenwand zur Seite gedrückt werden kann, so dass die Position des Halteelements stets lagerichtig verbleibt.

Erfindungsgemäß ist an der Halteeinrichtung ein U-förmiger Durchgang mit einer umlaufenden Seitenwand ausgeformt, durch die der Schaft des Bolzens hindurch ragt, wobei an der Seitenwand die mindestens eine mit den Ausnehmungen versehene Auflageschulter nach innen ragt und die Auflageschulter sich kontinuierlich an der Seitenwand um den U-förmigen Durchgang herum erstreckt.

Ferner ist erfindungsgemäß eine Vielzahl von Ausnehmungen mit mehreren Wellenscheiteln in der Auflageschulter ausgebildet, wobei die Wellenscheitel in ihrer Gesamtheit die Gegenfläche bilden. Die Wellen sind dabei hinreichend tief, so dass die Wellenscheitel die obere Kante einer beweglichen Wand bilden können und der Kante bzw. dem Wellenscheitel eine gewisse Ausweichbewegung ermöglicht ist.

Weitere vorteilhafte Ausgestaltungen sind in den Unteransprüchen angegeben.

Nachfolgend wird ein Ausführungsbeispiel der Erfindung in Verbindung mit den Figuren der Zeichnung näher erläutert. In den Figuren zeigen:
- Fig. 1: eine Ansicht eines Halteelements mit einer Halteeinrichtung von vorne,
- Fig. 2: eine Ansicht des Halteelements aus Fig. 1 mit der Halteeinrichtung von hinten,
- Fig. 3: eine Detail-Ansicht des Halteelements aus Fig. 1 auf das Detail B-B im Schnitt,
- Fig. 4: eine Detail-Ansicht des Halteelements aus Fig. 1 auf das Detail A-A im Schnitt,
- Fig. 5: eine perspektivische Ansicht von schräg oben auf ein Detail der Halteeinrichtung aus Fig.1,
- Fig. 6: eine Ansicht auf das Detail Halteeinrichtung aus Fig. 5 mit einer Sperrklinke
- Fig. 7a: eine perspektivische Ansicht eines T-Bolzens mit abgesetztem Schaft, und
- Fig. 7b: eine perspektivische Ansicht eines T-Bolzens mit durchgehendem Schaft.

### Beschreibung eines Ausführungsbeispiels

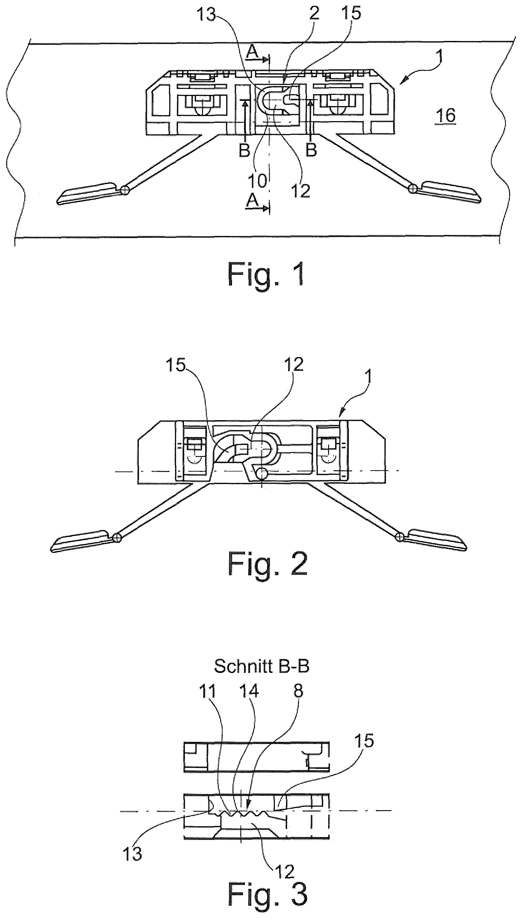

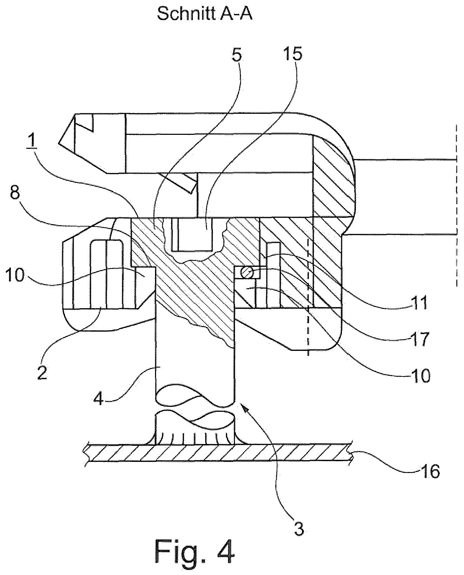

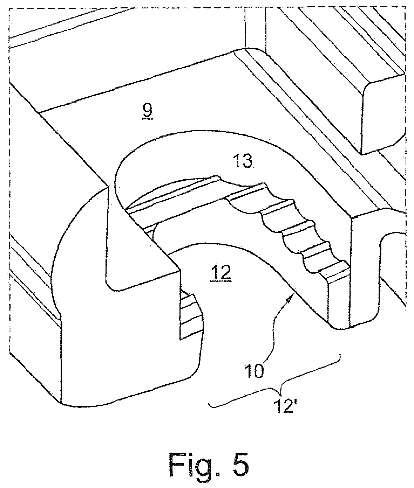

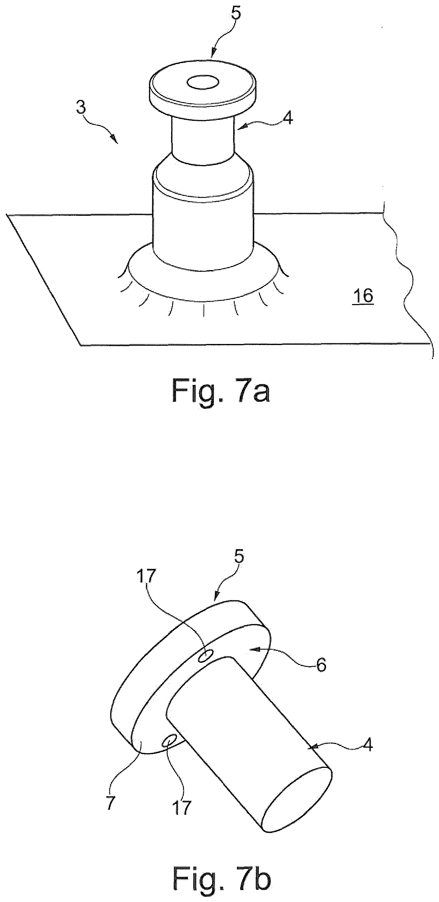

In Fig. 1 ist eine Ansicht eines Halteelements 1 mit einer Halteeinrichtung 2 von vorne dargestellt. Das Halteelement 1 wird von einem T-Bolzen 3 gehalten, vergl. Fig.4 und dient der Arretierung eines Bauteils, bei dem es sich um ein Bauelement eines Kfz, z.B. eine Leiste oder eine Verkleidung handeln kann. Die an dem Halteelement ausgebildete Halteeinrichtung 2 weist, wie aus Fig. 5 ersichtlich, eine Bodenwand 9 auf, in der ein U-förmiger Durchgang 12 mit einer umlaufenden Seitenwand 13 ausgeformt ist. In dem dargestellten Ausführungsbeispiel ist die Halteeinrichtung 2 etwas vertieft an dem Halteelement angeordnet. Dabei ist an der Seitenwand 13 etwa auf halber Höhe der Wand eine mit Ausnehmungen versehene Auflageschulter 10 ausgebildet, die radial nach innen ragt. Die Auflageschulter 10 besitzt eine Gegenfläche 8, auf die der Unterkopf 6 eines Bolzen-Kopfs 5 des T-Bolzens 3 zur Auflage kommen kann, vergl. Figuren 7a und 7b.

Die T-Bolzen 3 werden am Fuß des Bolzen-Schafts auf einer Metallfläche 16 aufgeschweißt, wobei der Bolzen-Kopf als Arretierung für Befestigungselemente dient. Trotz ihrer geringen Größe und dadurch extrem niedriger Aufbauhöhe zum Bauteil erreichen sie sehr hohe Festigkeitswerte in der Schweißverbindung.

Die Auflagefläche 7 am Unterkopf 6 des Bolzen-Kopfs 5 des T-Bolzens 3 weist, wie aus den Figuren 4 und 7a ersichtlich, zur Schweißverbindung hin. Der Schweißvorgang ist üblicherweise ein Hubzündungsschweißprozess, bei dem es zu einem Verspritzen von Schmelzspritzern 17 kommen kann, die sich auf der Auflagefläche 7 des Unterkopfs 6 ansetzen können, vergl. Fig. 4 und 7b.

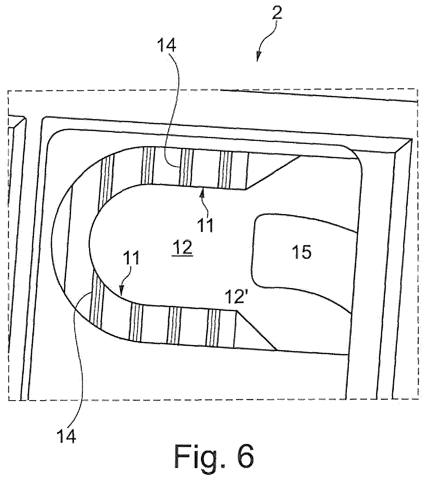

In der Auflageschulter 10 sind Ausnehmungen 11 ausgebildet, die die Gegenfläche 8 unterbrechen. In diese Ausnehmungen 11 können auf der Auflagefläche 7 des Unterkopfs 6 festgesetzte Verunreinigungen, z.B. Schweiß-Partikel 17, eintreten, so dass der Unterkopf 6 auf der Gegenfläche 8, die sich zwischen den Ausnehmungen 11 der Auflageschulter 10 erstreckt, zur Anlage kommen kann. In dem dargestellten Ausführungsbeispiel besteht, wie aus den Figuren 3 und 5 ersichtlich, die Vielzahl von Ausnehmungen 11 aus mehreren Wellen, deren Wellenscheitel 14 die Gegenfläche 8 bilden. Die Wellen verlaufen in Richtung der Öffnung 12' des U-förmigen Durchgangs 12, so dass alle Wellenscheitel 14 parallel zueinander angeordnet sind, vgl. Fig. 3, 5 und 6. Wie insbesondere in den Fig. 1, 2 und 6 zu erkennen, ist vor der Öffnung 12' des U-förmigen Durchgangs 12 an der Halteeinrichtung 2 eine in Richtung des Bolzen-Schafts federnde Sperrklinke 15 angeordnet, die in Sperrstellung ein Heraustreten des Bolzens aus dem U-förmigen Durchgang 12 entgegen der Einknöpfrichtung verhindert.

In einer nicht dargestellten Ausführungsvariante kann ein Freischnitt der Halteschulter an der Seitenwand ausgebildet sein, der zur Folge hat, dass die Auflageschulter einen gewissen Bewegungsfreiheitsgrad erhält. Ebenfalls kann bei einer nicht dargestellten Ausführungsform vorgesehen sein, dass die Wellenscheitel die Auflagefläche einer sich nach innen erstreckenden Rippe darstellen, so dass bei einem gleichzeitig erfolgten Freischnitt zur Seitenwand hin ein hoher Bewegungsfreiheitsgrad einer solchen Auflagerippe erhalten wird und diese Auflagerippe einem größeren Schweißspritzer besser ausweichen kann.

Die Wellentäler, die sich dergestalt durch die Auflageschulter nach unten hindurch erstrecken, können eine größere Verunreinigung des Unterkopfs des Bolzen-Kopfs kompensieren.

### Bezugszeichenliste

Halteelement (1)
Halteeinrichtung (2)
T-Bolzen (3)
Bolzen-Schaft (4)
Bolzen-Kopf (5)
Unterkopf (6)
Auflagefläche (7)
des Unterkopfs
Gegenfläche (8)
an der Auflageschulter
Bodenwand (9)
Auflageschulter (10)
Ausnehmungen (11)
Durchgang (12)
Seitenwand (13)
Wellenscheitel (14)
Sperrklinke (15)
Metallfläche (16)
Schmelz-oder Schweißspritzer (17)

## Patentansprüche

1. Anordnung zum Befestigen eines aus Kunststoff bestehenden Halteelements (1) an einer Metallfläche (16), umfassend das Halteelement, die Metallfläche, einen T-Bolzen (3), Stufen-Bolzen oder dergleichen und eine Halteeinrichtung (2), an der eine Bodenwand (9) ausgebildet ist und die mit dem T-Bolzen (3), Stufen-Bolzen oder dergleichen zusammenwirkt, wobei der T-Bolzen (3) einen Bolzen-Schaft (4) und einen Bolzen-Kopf (5) mit einem Unterkopf (6) aufweist, der mit einer Auflagefläche (7) zur Auflage auf mindestens einer an der Halteeinrichtung ausgeformten Gegenfläche (8) kommt und der Bolzen-Schaft (4) an die Metallfläche (16) angeschweißt ist, und wobei die mindestens eine Gegenfläche (8) der Halteeinrichtung an mindestens einer den Bolzen-Schaft zumindest zum Teil umschließenden Auflageschulter (10) für den Unterkopf des Bolzen-Kopfs ausgebildet ist,
wobei in der Auflageschulter (10) Ausnehmungen (11) ausgebildet sind, die die Gegenfläche (8) unterbrechen,
an der Halteeinrichtung ein U-förmiger Durchgang (12) mit einer umlaufenden Seitenwand (13) ausgeformt ist, durch die der Schaft (4) des Bolzens (3) hindurch ragt, wobei an der Seitenwand (13) die mindestens eine mit den Ausnehmungen versehene Auflageschulter (10) nach innen ragt und
die Auflageschulter (10) sich kontinuierlich an der Seitenwand (13) um den U-förmigen Durchgang (12) herum erstreckt und die Vielzahl von Ausnehmungen (11) als mehrere Wellen ausgebildet sind, deren Wellenscheitel (14) die Gegenfläche (8) bilden.

2. Anordnung nach Anspruch 1, wobei die Wellen in Richtung der Öffnung (12') des U-förmigen Durchgangs (12) verlaufen und somit die Wellenscheitel (14) parallel zueinander angeordnet sind.

3. Anordnung nach einem der vorhergehenden Ansprüche, wobei vor der Öffnung des U-förmigen Durchgangs (12) an der Halteeinrichtung (2) eine in Richtung des Bolzen-Schafts federnde Sperrklinke (15) angeordnet ist, die in Sperrstellung ein Heraustreten des Bolzens aus dem U-förmigen Durchgangs (12) verhindert.

4. Anordnung nach einem der vorhergehenden Ansprüche, wobei das Halteelement (1) ein Halteclip für ein Bauteil an einem Kraftfahrzeug ist.

## Claims

1. Arrangement for fastening a retaining element (1) which consists of plastic to a metal surface (16), comprising the retaining element, the metal surface, a T stud (3), step stud or the like and a retaining device (2), on which a bottom wall (9) is configured and which interacts with the T stud (3), step stud or the like, the T stud (3) having a stud shank (4) and a stud head (5) with an underhead (6) which comes into contact with a bearing face (7) on at least one corresponding face (8) which is formed on the retaining device, and the stud shank (4) being welded to the metal surface (16), and the at least one corresponding face (8) of the retaining device being configured on at least one bearing shoulder (10) for the underhead of the stud head, which bearing shoulder (10) encloses the stud shank at least partially, recesses (11) which interrupt the corresponding face (8) being configured in the bearing shoulder (10),
a U-shaped passage (12) with a circumferential side wall (13) being formed on the retaining device, through which side wall (13) the shank (4) of the stud (3) protrudes, the at least one bearing shoulder (10) which is provided with the recesses protruding inward on the side wall (13), and
the bearing shoulder (10) extending continuously on the side wall (13) around the U-shaped passage (12), and the multiplicity of recesses (11) being configured as a plurality of undulations, the undulation peaks (14) of which form the corresponding face (8).

2. Arrangement according to Claim 1, the undulations running in the direction of the opening (12') of the U-shaped passage (12), and the undulation peaks (14) therefore being arranged parallel to one another.

3. Arrangement according to one of the preceding claims, a locking pawl (15) which is sprung in the direction of the stud shank being arranged in front of the opening of the U-shaped passage (12) on the retaining device (2), which locking pawl (15) prevents the stud from exiting the U-shaped passage (12) in the locked position.

4. Arrangement according to one of the preceding claims, the retaining element (1) being a retaining clip for a component on a motor vehicle.

## Revendications

1. Agencement permettant de fixer un élément de maintien (1) en matière synthétique sur une surface métallique (16), comprenant l'élément de maintien, la surface métallique, un boulon en T (3), des boulons étagés ou similaires, et un dispositif de maintien (2) sur lequel est réalisé une paroi de fond (9) et qui coopère avec le boulon en T (3), les boulons étagés ou similaires, le boulon en T (3) présentant une tige de boulon (4) et une tête de boulon (5) dotée d'un dessous de tête (6) qui prend appui par une surface d'appui (7) sur au moins une contre-surface (8) formée sur le dispositif de maintien, et la tige de boulon (4) étant soudée à la surface métallique (16), et ladite au moins une contre-surface (8) du dispositif de maintien étant réalisée au niveau d'au moins un épaulement d'appui (10), entourant la tige de boulon au moins en partie, pour le dessous de tête de la tête de boulon, dans lequel
dans l'épaulement d'appui (10), des évidements (11) qui interrompent la contre-surface (8) sont réalisés,
sur le dispositif de maintien, un passage en forme de U (12) est formé avec une paroi latérale périphérique (13) à travers laquelle la tige (4) du boulon (3) fait saillie, ledit au moins un épaulement d'appui (10) muni des évidements faisant saillie vers l'intérieur sur la paroi latérale (13), et
l'épaulement d'appui (10) s'étend en continu sur la paroi latérale (13) autour du passage en forme de U (12), et la pluralité d'évidements (11) est réalisée sous la forme de plusieurs ondulations dont les sommets d'ondulation (14) forment la contre-surface (8).

2. Agencement selon la revendication 1, dans lequel les ondulations s'étendent en direction de l'ouverture (12') du passage en forme de U (12), et les sommets d'ondulation (14) sont donc disposés en parallèle les uns aux autres.

3. Agencement selon l'une quelconque des revendications précédentes, dans lequel, devant l'ouverture du passage en forme de U (12) sur le dispositif de maintien (2) est disposé un cliquet d'arrêt (15) faisant ressort en direction de la tige de boulon, qui empêche dans la position d'arrêt toute sortie du boulon du passage en forme de U (12).

4. Agencement selon l'une quelconque des revendications précédentes, dans lequel l'élément de maintien (1) est une agrafe de maintien pour un composant sur un véhicule automobile.
